# EUROPÄISCHE PATENTSCHRIFT

(11) **EP 0 571 580 B1**
(45) Veröffentlichungstag und Bekanntmachung des Hinweises auf die Patenterteilung: **10.05.1995**
(21) Anmeldenummer: 92924560.3
(22) Anmeldetag: 09.12.1992
(51) Int. Cl.: D02G 1/08

(54) **FRIKTIONSFALSCHDRALLAGGREGAT**
FRICTIONAL FALSE-TWISTING UNIT
UNITE FAUSSE-TORSION A FRICTION

(30) Priorität: 12.12.1991 DE 4140903; 25.03.1992 DE 4209587; 13.05.1992 DE 4215762
(43) Veröffentlichungstag der Anmeldung: 01.12.1993
(73) Patentinhaber: BARMAG AG, D-42862 Remscheid (DE)
(72) Erfinder: LORENZ, Hellmut, D-5630 Remscheid 1 (DE)
(74) Vertreter: Pfingsten, Dieter, Dipl.-Ing.
(86) Internationale Anmeldenummer: DE9201024
(87) Internationale Veröffentlichungsnummer: WO9312280

(56) Entgegenhaltungen:
- DE-A- 2 936 845
- FR-A- 2 375 360
- GB-A- 2 058 157
- GB-A- 2 120 286

## Beschreibung

Die Erfindung betrifft ein Friktionsfalschdrallaggregat nach dem Oberbegriff des Anspruchs 1.

Ein derartiges Friktionsfalschdrallaggregat ist beispielsweise aus der DE OS 29 36 791 bekannt. Bei diesem bekannnten Friktionsfalschdrallaggregat sind die angetriebenen Wellen, auch als Friktionselementwellen bezeichnet, an einem Ende mit radialem Spiel in der ortsfesten Halterung bzw. im Gehäuse des Friktionsfalschdrallaggregats gelagert, während sie an dem anderen Ende radial starr im Gehäuse sitzen.

Innerhalb des Radialspiels ist die Friktionselementwelle weich gelagert und in gewisser Weise gedämpft beweglich aufgehängt.

Dies wird bei der bekannten Ausführung dadurch erreicht, daß sich die nichtdrehenden Lagerteile, welche die Außenringe der Wälzlager sind, gegenüber der ortsfesten Halterung über einen zwischengeschalteten Gummiring abstützen, der einerseits eine gewisse radiale Beweglichkeit der angetriebenen Welle zuläßt und der andererseits eine Funktion als Dämpfungselement besitzt. Dabei wird der Gummiring entsprechend der Auslenkung der weichen Lagerung gewalkt.

Das Friktionsaggregat soll einen schwingungsarmen Lauf aufweisen und Resonanzschwingungen sollen vermieden werden.

Dies wird auch im Falle des Friktionsaggregats erfüllt, welches durch die DE OS 29 36 845 bekannt ist. Bei diesem bekannten Friktionsaggregat sind die Friktionselementwellen ebenfalls mit einem Radialspiel gegenüber der ortsfesten Halterung in Gummiringen gelagert, welche dämpfende Eigenschaften haben.

Diese Gummiringe haben sich in der Praxis bewährt, da sie zuverlässig und verschleißfest sind und darüberhinaus eine einfache Montage der Friktionsfalschdrallaggregate gewährleisten.

Bei der Montage der bekannten Friktionsfalschdrallaggregate müssen die Gummiringe unter radialer Zusammendrückung in axialer Längsrichtung der Wellen zusammen mit den Lagern in die Aufnahmebohrungen der Lager eingesteckt werden.

Den Einbaumöglichkeiten der Gummiringe sind allerdings Grenzen gesetzt, da diese weder beliebig zusammengedrückt werden können noch mit beliebigen Übermaß in die Aufnahmebohrungen eingebracht werden können.

Die an sich sehr guten Dämpfungseigenschaften der bekannten Friktionsfalschdrallaggregate lassen sich also nicht ohne Beeinträchtigung der Montage weiter verbessern.

Die Entwicklung dieser Friktionsfalschdrallaggregate strebt jedoch zunehmend höhere Umdrehungszahlen an, so daß hierdurch insbesondere Schwingungsprobleme entstehen, wenn die Friktionselementwellen die kritischen Drehzahlen durchfahren.

Insbesondere beim Durchfahren der kritischen Drehzahlen bedarf es im Hinblick auf die zunehmende Entwicklung der Friktionsfalschdrallaggregate einer technisch einfach zu realisierenden verstärkten Dämpfung.

Dabei muß auch berücksichtigt werden, daß die Friktionsaggregate zunehmend mit längeren Wellen und größeren Massen ausgestattet werden, so daß sich eine, - praktisch nicht auswuchtbare - , höhere Restunwucht ergibt.

Aufgabe der Erfindung ist es, das bekannte Friktionsfalschdrallaggregat so weiterzubilden, daß sein Schwingungsverhalten stärker gedämpft wird als bisher und daß trotzdem die Montage weiter vereinfacht wird.
Radiale Ausschläge der Welle sollen bis zu hohen Drehzahlen (mindestens 20 000 Umdrehungen/min.) gering bleiben, obwohl es sich um eine fliegende Lagerung handelt, obwohl die Wellen länger sind und mit größeren Massen bestückt sind als bisher, obwohl die Wellen und die darauf angeordneten Friktionsscheiben unvermeidlich, z. B. durch ungleichmäßigen Verschleiß eine Restunwucht haben, die praktisch nicht ausgewuchtet werden kann und obwohl die Wellendurchmesser gering sind. Dabei kommt es insbesondere darauf an, daß sich die achsiale Lage der Welle relativ zum Gehäuse nicht verändern darf.

Diese Aufgabe wird gelöst durch die kennzeichnenden Merkmale des Anspruchs 1.

Aus der Erfindung ergibt sich der Vorteil, daß sich die Dämpfungseigenschaften in weiten Bereichen variieren lassen ohne daß sich der konstruktive Aufwand vergrößert. Die Lösung zeichnet sich insbesondere dadurch aus, daß hier zwar eine sogenannte "weiche" Lagerung stattfindet Es wird jedoch der übliche Nachteil der weichen Lagerung vermieden, daß sich die Rotationsachse der Welle bei jedem Lauf und bei jeder Änderung des Betriebszustandes (Drehzahl) neu einstellt. Vielmehr sucht sich nach der Lösung gemäß Anspruch 1 jede Welle beim ersten Lauf selbsttätig ihre Rotationsachse, die sich sodann nicht mehr ändert.

Dies wird dadurch erreicht, daß die radiale Bewegung der Wellen, die auch als Friktionselementwellen bezeichnet werden, auf die Reibungsdämpfer übertragen wird und zur Festlegung der Dämpfungseigenschaften lediglich der Reibungsdämpfer entsprechend ausgelegt werden muß.

Deshalb sind die Reibungsdämpfer so anzuordnen, daß sie in denjenigen Bereichen der nichtdrehenden Lagerteile angreifen, welche eine Relativbewegung bzgl. der ortsfesten Halterung ausführen. Dies sind die Außenringe der Wälzlager der Friktionselementwellen. Auf diesen stützen sich die Reibungsdämpfer ab, wobei sie sich zwischen dem Gehäuse und dem Außenring erstrecken.

Es ist von Bedeutung, daß ein Ende der Friktionselementwelle axial und radial festgelegt ist und das andere Ende axial festgelegt und radial frei beweglich ist. Dieses Ende wird im folgenden als das freie Ende bezeichnet.

Hierbei ist weiterhin von Bedeutung, daß die Friktionselementwellen fliegend gelagert sind. Der Kopf jeder Friktionselementwelle ist also radial frei beweglich und vollzieht deshalb Ausschläge. Diese Ausschläge werden angeregt durch periodische Schwingungen die insbesondere beim Durchfahren der kritischen Drehzahlen so stark gedämpft werden müssen, daß die Friktionselemente nicht zerstört werden.

Weiterhin ist von Bedeutung, daß die Friktionselementwellen in axialer Richtung absolut starr festliegen. Dies wird durch einen Anschlag erreicht, gegen den die Lagerung der Friktionselementwellen abgestützt ist.

Dabei kommt es nicht nur auf den axial starren Einbau an, sondern auch darauf, daß die axiale Lage der Wellen zueinander bis auf wenige hundertstel Millimeter genau ist, um eine Berührung der Friktionsscheiben und damit eine Beschädigung des Fadens zu vermeiden. Die achsiale Vorspannung kann kraftschlüssig durch federnde Elemente, z. B. Metallfedern oder Ringen geschehen. Die achsiale Vorspannung der beiden Lager kann jedoch auch dadurch erzeugt werden, daß der Außenring des einen Lagers in seiner Lagerbuchse unter Vorspannung festgelegt, z. B. verklebt oder in sonstiger Weise verbunden wird. Schließlich kann die Vorspannung der Lager auch dadurch erzeugt werden, daß die Kugelführung der beiden Lager relativ zueinander von vornherein so in einen gemeinsamen Außenring eingebracht werden, daß die Lager relativ zueinander unter Vorspannung stehen.

Für die Erfindung ist die Lagerung der Wellen von besonderer Bedeutung.

Diese Lagerung besteht aus einem Festlager und einem Loslager, welche die folgenden Eigenschaften erfüllen:

Für das Festlager gilt:
Bei dem Festlager ist der Außenring gegenüber dem Gehäuse im wesentlichen axial festgelegt. Die Welle ist gegenüber dem Außenring ebenfalls im wesentlichen axial festgelegt. Die Festlegung ist in axialer Richtung wirksam. Die axiale Festlegung kann z.B. durch gegenseitige Vorspannung der beiden Wälzlager erfolgen.

Es kann sinnvoll sein, die Lagerung in radialer Richtung weich auszuführen. Mit dieser Maßnahme läßt sich nämlich erfindungsgemäß das Schwingungsverhalten beeinflussen, ohne daß sich die Welle in axialer Richtung bewegen kann.

Die axiale Festlegung dient der Vermeidung einer Berührung der Reibscheiben, die zwischen sich einen geringen Abstand bilden, in welchem der zu kräuselnde Chemiefaden läuft.

Die in radialer Richtung weiche Lagerung ist nicht zwingend sondern kann zusätzlich erforderlich sein um das Schwingungsverhalten dämpfend beeinflußen zu können.

Für das Loslager gilt:
Demgegenüber ist bei einem Loslager die Welle gegenüber dem Außenring axial festgelegt, während der Außenring gegenüber dem Gehäuse axial bewegbar ist. Hierdurch wird der Außenring des Loslagers unter dem Einfluß der axialen äußeren Andruckkräfte des Reibungsdämpfers in radialer Bewegungsrichtung gedämpft, während gleichzeitig eine genau definierte axiale Lagerpositionierung für die Welle erzielt wird.

Da die Welle ebenfalls axial gegenüber dem Außenring festgelegt ist, ist zur Vermeidung innerer Verspannungen, beispielsweise durch Wärmedehnung, der Außenring gegenüber dem Gehäuse axial bewegbar, und zwar so, daß die in axialer Richtung eindeutig festgelegte Welle in axialer Richtung nicht unkontrolliert entweichen kann.

Diese Art der Lagerung ist erfindungsgemäß dann realisiert, wenn die Lagerung bei axialer Festlegung insgesamt noch zusätzlich eine radial federnd bewegliche Wellenaufhängung ermöglicht.

Durch diese Maßnahme wird nämlich, wie die Erfindung erkannt hat, bei federnder und gedämpfter Radialbewegung eine Beeinflussung des Schwingungsverhaltens ermöglicht.

Weiterführende Ausführungsbeispiele machen sich eine Lagerung zunutze, bei welcher zwei einzelne Wälzlager in axialer Richtung gegeneinander verspannt sind, wobei eines der Wälzlager das Festlager ist und das andere das Loslager.

Durch die axiale Vorspannung sind axiale unkontrollierte Bewegungen der Friktionselementwellen ausgeschlossen. Deshalb wird zuverlässig vermieden, daß die einzelnen Friktionselemente gegeneinander schlagen und beschädigt werden.

Die Erfindung macht sich die Erkenntnis zunutze, daß die unwuchterregten periodisch angeregten radialen Schwingungen der Wellen eines Friktionsaggregates durch die von äußeren Andruckkräften festgelegten Reibungsdämpfer bedämpft werden können.

Die radialen Bewegungen der Friktionselementwelle werden also durch die äußeren Andruckkräfte auf die Reibungsdämpfer übertragen und von den Reibungsdämpfern so beeinflußt, daß ein Aufschaukeln des Systems verhindert wird.

Als Reibungsdämpfer kommen prinzipiell Dämpfungselemente mit wegabhängiger Rückstellkraft in Frage, wie z.B. radial belastete O-Ringe. In diesem Fall ist die Rückstellkraft abhängig von der Auslenkung bzw. von der auslenkungsabhängigen Verformung des Dämpfungselements.

Alternativ oder zusätzlich kommen auch Dämpfungselemente zur Anwendung, die eine wegunabhängige Reibungskraft erzeugen. In diesem Fall werden die Dämpfungselemente in axialer Richtung von einer Normalkraft belastet, wodurch die Dämpfungswirkung abhängt von der Höhe der Normalkraft und dem Reibbeiwert zwischen Dämpfungselement und Auflagefläche.

Insbesondere der letzten Weiterbildung kommt besonderes Augenmerk zu, da die Dämpfungswirkung über die Höhe der Normalkraft vorgegeben werden kann.

So kann z.B. vorgesehen sein, die Normalkraft so hoch vorzugeben, daß lediglich beim ersten Hochfahren des Friktionsaggregates ein einmaliges Losbrechen des Dämpfungselemtes mit wegunabhängiger Reibungskraft erfolgt, wodurch sich die Friktionselementwelle selbst zentriert.

Die Erfindung hat nämlich erkannt, daß die unter Unwucht laufende Friktionselementwelle bei der ersten Inbetriebnahme bestrebt ist, sich selbst zu zentrieren. Die dabei auftretenden Unwuchtkräfte sind so groß, daß die Haftreibungskräfte zwischen den Reibungsdämpfern und dem Gehäuse überwunden werden. Dabei bricht die Montageposition der Wälzlager los und die Welle verschiebt sich in ihre selbstzentrierte Position, solange bis die Unwuchtkräfte nicht mehr imstande sind, die Gleitreibungskräfte zu überwinden. Dann läuft die Welle in ihrer selbtzentrierten Position und behält diese bei, da sie jetzt wieder von den Haftreibungskräften gehalten wird. In dieser Position wird die Welle, bildlich gesprochen, eingefroren, wobei die eingefrorene Position die geringsten Schwingungsanregungen hervorruft.

Es wird deshalb vorgeschlagen, daß die Reibungsdämpfer so eingestellt werden, daß die axialen äußeren Andruckkräfte nur dann überwunden werden, wenn die infolge von Unwuchten an den Wellen angreifenden Unwuchtkräfte den Wert übersteigen, der zur Überwindung der Haftreibung zwischen dem Reibungsdämpfer und der Stirnfläche des Außenringes notwendig ist. Dies ist im Bereich der gefährlichen Resonanzschwingungen relevant, wenn die Friktionselementwellen ihre kritischen Drehzahlen durchfahren.

Außerdem bietet diese Weiterbildung den Vorteil einer sehr steifen Dämpfung. Folglich sind die Dämpfungskräfte sehr hoch und die Auslenkungen sehr klein.

Ansonsten bieten die erfindungsgemäßen Reibungsdämpfer den Vorteil, daß sie im Drehzahlbereich der Betriebsdrehzahlen statisch wirken. In diesem Drehzahlbereich läuft die Friktionselementwelle überkritisch.

Es ist eine weitere Besonderheit der Erfindung, daß die axiale Festlegung der Friktionselementwellen eine härtere Lagerung bewirkt. Dabei kann die Schwingungsenergie der Wellen nur noch durch einen einzigen Gummiring aufgenommen und gedämpft werden. Dieser Gummiring sitzt dem freien Wellenende zugewandt und bewirkt durch seine Walkarbeit die Dämpfung der Welle. Da allerdings, im Gegensatz zu früheren Lösungen nur noch ein einziger Gummiring vorhanden ist, muß der erfindungsgemäße Reibungsdämpfer den Überschuß an Schwingungsenergie aufnehmen und vernichten.

Die Vorteile des Anspruchs 2 liegen darin, daß die Drehmomenteinleitung des Antriebes in die Wellen am starren Ende erfolgt und die Montageanpassung des Friktionsaggregates an den Antrieb ohne Einfluß auf die axiale Festlegung der Wellen ist.

Die Merkmale des Anspruchs 3 bieten den Vorteil, daß die axialen äußeren Andruckkräfte nicht nur die Radialbewegung der Welle in den Reibungsdämpfer einleiten sondern darüberhinaus zusätzlich auch die axiale Verspannung der beiden Wälzlager übernehmen. Dabei ist die Höhe der axialen Vorspannkraft so zu wählen, daß der Reibungsdämpfer auf der Stirnfläche des Außenrings des Loslagers festsitzt.

Hierbei kann es sinnvoll sein, daß die jeweils notwendige Andrückkraft zur Dämpfung der Radialbewegung der Friktionselementwellen über die axiale Vorspannkraft eingestellt wird, so daß sich der Montageaufwand noch weiter reduzieren läßt. Für diesen Fall empfiehlt es sich, die Reibungsdämpfer so anzuordnen, daß sie sich einerseits an dem Gehäuse abstützen und daß sie sich andererseits auf Ringstufen oder Ringabsätzen abstützen, welche unmittelbar durch die Außenringe gebildet werden. Durch die unmittelbare Verbindung zwischen den Außenringen und den Reibungsdämpfern kann man erreichen, daß die Anzahl der Freiheitsgrade des schwingungsfähigen Systems, welches das Friktionsfalschdrallaggregat bildet, so gering wie möglich gehalten wird. Hierdurch läßt sich also das komplexe Schwingungsverhalten auf eine geringe Zahl von Einflußparametern reduzieren.

Die Merkmale des Anspruchs 4 betreffen eine Weiterbildung der Erfindung mit dem Vorteil, daß genormte Bauelemente als Reibungsdämpfer verwendet werden. Diese Weiterbildung der Erfindung macht sich die Erkenntnis zunutze, daß die Radialbewegung der Friktionselementwellen nur gering ist und daß die Abstützkräfte der Tellerfedern ohne weiteres von deren Innen- bzw. Außenrand aufgenommen werden können und die Kraftübertragung an den Kontaktstellen zwischen Innen- bzw. Außenrand der Tellerfedern und Außenring bzw. Gehäuse erfolgt.

Dabei wird über die Abstützkräfte die erforderliche Haftreibungskraft erzeugt, welche die radiale Schwingungsbewegung der drehenden Wellen auf die Reibungsdämpfer überträgt.

Die jeweils mittels der Tellerfedern aufgebrachten Vorspannkräfte sind in weiten Bereichen an den jeweiligen Anwendungsfall anpaßbar, da die Kennlinien der Tellerfedern durch Parallel- bzw. Reihenschaltung beeinflußt werden können. Außerdem gibt es eine Vielzahl von Tellerfedern gleicher Abmessungen aber unterschiedlicher Federsteifigkeiten, so daß die jeweils optimale Tellerfeder passend ausgewählt werden kann.

Es ist zwar aus der DE OS 29 36 845 bekannt, die Lager einer Friktionselementwelle mittels Tellerfedern gegenseitig zu verspannen.

Dieser Anwendungsfall unterscheidet sich jedoch wesentlich von der Erfindung darin, daß die Tellerfeder bei der bekannten Bauweise ausschließlich der axialen Lagerverspannung dient. Außerdem sitzt die Tellerfeder an dem radial festeingespannten Ende der Friktionselementwelle.

Im Falle der Erfindung kommt es jedoch auf die radiale Bewegung des freien Endes der Friktionselementwelle an, da hierdurch erst die Einwirkung von Haftreibungskräften zum Tragen kommt. Diese Reibkräfte bewirken eine Verformung der Tellerfeder in radialer Richtung. In der radialen Richtung erfolgt insbesondere bei Tellerfedern eine Verformung mit großem Dämpfungsanteil, was sich die Erfindung zunutze macht.

In einer Alternative hierzu bietet die Weiterbildung nach Anspruch 5 an, daß die Einspannung des festen Wellenendes von einem Gummiring vorgenommen wird. Die Höhe der Einspannkraft ergibt sich aus der jeweiligen Preßkraft, mit welcher der Gummiring axial zusammengepreßt ist. Hierzu dient insbesondere zusätzlich zu dem Gummiring eine Tellerfeder, welche den Gummiring gegen eine Durchmesserstufe des Außenrings des Wälzlagers vorspannt. Durch das Zusammenwirken von Gummiring und Tellerfeder wird einerseits die punktuelle Nachgiebigkeit des Gummiringes genutzt, während die Höhe der axialen Spannkraft durch die Tellerfeder bestimmt ist. Dabei ist darauf zu achten, daß die axiale Spannkraft so groß ist, daß der eingespannte Lageraußenring nicht gegen die Kraft der Tellerfeder abheben kann.

Die Weiterbildung nach Anspruch 6 bietet den Vorteil einfachster Fertigung und Montage. Dabei erfolgt die axiale Festlegung des Außenringes beispielsweise durch einen Spannring, der den Außenring gegen die Druckplatte hält.

Die Weiterbildung nach Anspruch 7 bietet eine einfache Möglichkeit der axialen Verspannung zweier einzelner Wälzlager. Hierbei ist zunächst der Außenring am freien Ende der Welle in dem Außenring des Wälzlagers am festgelegten Ende der Welle gleitend untergebracht. Er wird dann, beispielsweise durch eine Tellerfeder, gegenüber dem Außenring des festgelegten Wellenendes, unter axialer Vorspannkraft gehalten und in dieser Position fixiert.
Hierzu ist ein Ausführungsbeispiel gegeben.

Die Weiterbildung nach Anspruch 8 bietet den Vorteil, daß ein günstiger Krafteinleitungspunkt für die Haftreibungskräfte bereitgestellt wird, so daß hohe Dämpfungswirkungen mit relativ geringen Andrückkräften erzielt werden. In diesem Fall greift nämlich die dämpfende wirkende Kraft von dem Reibungsdämpfer auf die Welle als Moment an dieser an, wobei der Hebelarm zwischen dem Krafteinleitungspunkt in die Welle und dem Festlager den größtmöglichen Wert annimmt.

Die Weiterbildung nach Anspruch 9 macht sich die Erkenntnis zunutze, daß die ringförmigen Gummidämpfer bei der Zentrierung der Friktionselementwellen hilfreich sein können.

Derartige ringförmige Gummidämpfer können nämlich das Bestreben einer schnelldrehenden vertikal ausgerichteten Welle zur Selbstzentrierung unterstützen.

Es soll ausdrücklich gesagt sein, daß dieser Vorteil nicht allein auf Dämpfer beschränkt ist, die aus Gummi bestehen, sondern daß die Dämpfer prinzipiell aus jedem vergleichbaren Elastomer bestehen können.

Anspruch 10 stellt eine vollkommen spielfreie Wellenlagerung zur Verfügung, bei welcher die Wellenauslenkungen vollkommen spielfrei auf die Lageraußenringe übertragen werden können und damit bereits im Entstehen gedämpft werden .

Im folgenden wird die Erfindung anhand von Ausführungsbeispielen näher erläutert.

Es zeigen
- Fig 1: ein erstes Ausführungsbeispiel der Erfindung anhand einer einzigen Friktionselementwelle mit festgelegtem Wellenende;
- Fig 1a: eine Weiterbildung des Ausführungsbeispiels nach Fig 1 mit eingespanntem Wellenende;
- Fig 2: ein zweites Ausführungsbeispiel der Erfindung anhand einer einzigen Friktionselementwelle;
- Fig 2a: eine Detaildarstellung des Ausführungsbeispiels nach Fig. 2 zur Darstellung der Lagerung am freien Wellenende;
- Fig 2b: eine Detaildarstellung einer alternativen Lagerung des Ausführungsbeispiels nach Fig 2 am festgelegten Wellenende;
- Fig 3: ein Friktionsfalschdrallaggregat mit drei Friktionselementwellen in axialer Aufsicht;
- Fig 4: ein Einbaubeispiel der erfindungsgemäßen Reibungsdämpfer an einer Friktionselementwelle;
- Fig 5: ein Diagramm zum Darstellung der Radialauslenkungen in Abhängigkeit der Drehzahl;
- Fig 6a,b: je ein Ausführungsbeispiel der Erfindung gem Fig 1 - 4 mit zwangszentrierten Tellerfedern.

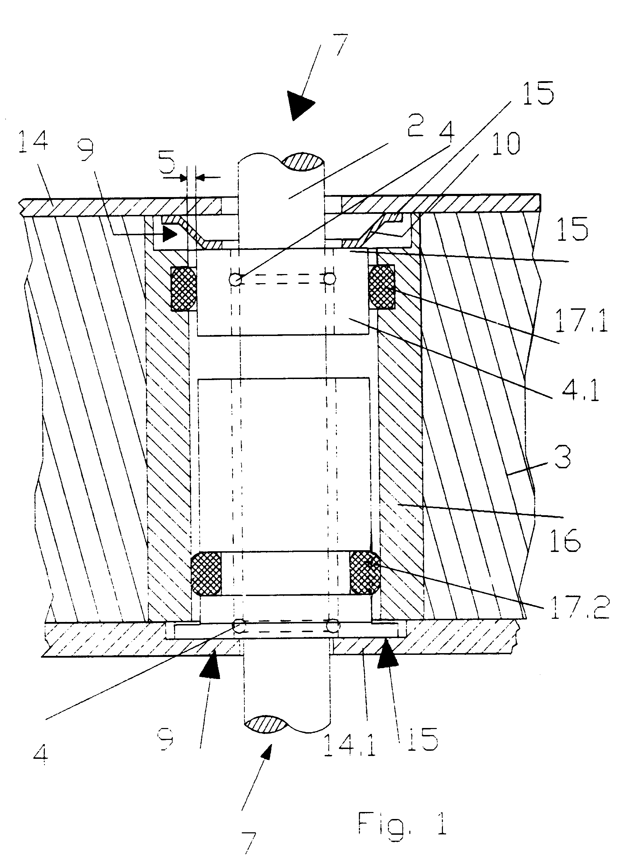

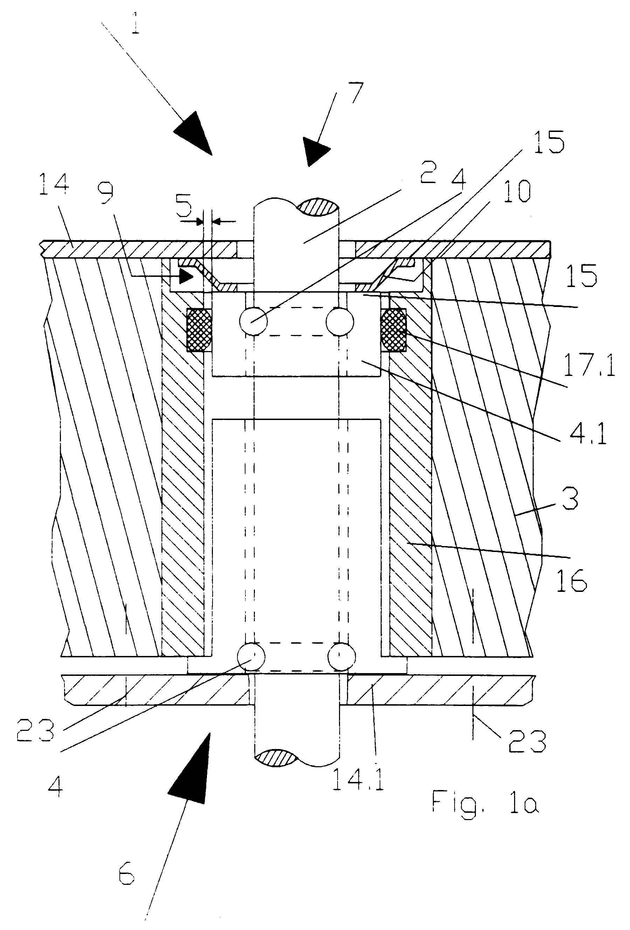

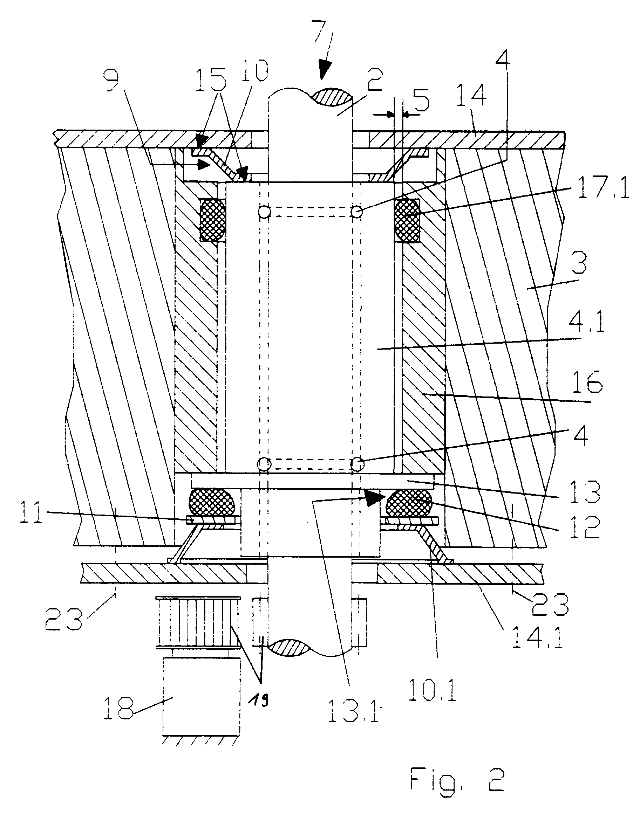

Sofern im folgenden nichts anderes gesagt ist, gilt die Beschreibung stets für alle Fig 1 bis 4 und 6a-b.

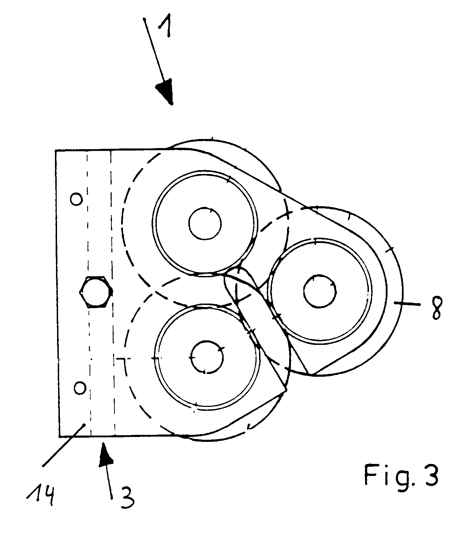

Fig 3 zeigt ein Friktionsfalschdrallaggregat 1 zum Kräuseln von Chemiefasern in der axialen Aufsicht. Das Friktionsfalschdrallaggregat verfügt in diesem Fall über drei vertikal stehende Friktionselementwellen 2, welche in der axialen Draufsicht gemäß Fig 3 in Form eines gleichseitigen Dreiecks derart angeordnet sind, daß sich die Friktionselemente 8, welche hier als Friktionsscheiben ausgebildet sind, im Zentrum des Dreiecks überlappen. Diesbezüglich wird auf die DE OS 29 36 791 und die DE OS 29 36 845 in vollem Umfang Bezug genommen.

Wie die Fig 1, 1a, 2, 2a, 2b und 4 weiterhin zeigen, sind die Friktionselementwellen 2 gegenüber der ortsfesten Halterung 3, die auch als Gehäuse 3 bezeichnet wird, in Wälzlagern 4 drehbar gelagert. Die ortsfeste Halterung 3 wird im Falle der Ausführungsbeispiele der Fig. 1, 1a, 2, 2b und 4 stirnseitig von der Druckplatte 14 bzw. der Gegendruckplatte 14.1 abgeschlossen.

Jedes der Lager 4 besteht aus einer nicht näher bezeichneten umfangsmäßigen Lagerrille, die sich mit der Friktionselementwelle 2 mitdreht und einem nichtdrehenden Lagerteil 4.1, welches allgemein als Außenring 4.1 bezeichnet wird.

Der Außenring 4.1 ist bezüglich des Gehäuses rotationsmäßig unbeweglich.
Die Außenringe 4.1 am freien Wellenende 7 besitzen bezüglich des Gehäuses 3 ein Radialspiel 5, welches so bemessen ist, daß die Friktionselementwelle 2 eine unwuchtbedingte Bewegung ausführen kann, ohne das Gehäuse 3 dabei zu berühren. Diesbezüglich wird im vollen Umfang auf den bereits oben angeführten Stand der Technik Bezug genommen.

Diese unwuchterregte Bewegung der Außenringe 4.1 kann in an sich bekannter Weise dadurch gedämpft werden, daß die Außenringe innerhalb des Radialspiels in radialen Gummidämpfern 17.1 bzw. 17.2 sitzen, die sich ihrerseits an dem Gehäuse 3 abstützen.

Es soll jedoch ausdrücklich gesagt sein, daß dies keine Beschränkung der Erfindung darstellt, sondern daß die Erfindung auch ohne diese radialen Gummidämpfer 17.1 bzw 17.2 auskommt.

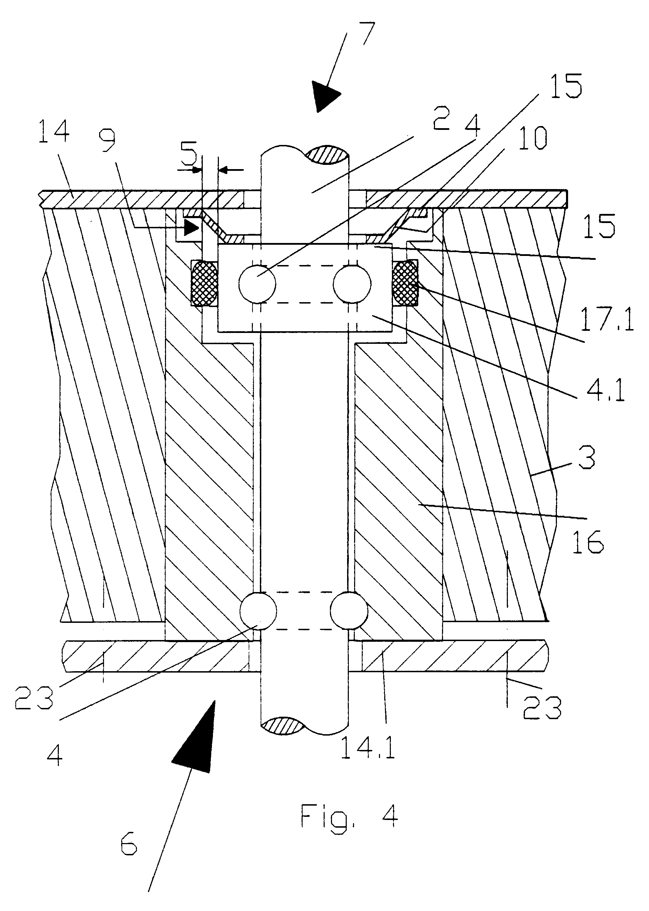

Allen Ausführungsbeispielen ist gemeinsam, daß ein Ende der drehenden Wellen bezüglich des Gehäuses 3 festgelegt ist, z.B. Ende 6 gem. Fig 4, und daß das gegenüberliegende Ende frei beweglich innerhalb des Radialspiels 5 ist.

Eine Besonderheit besteht bei Fig 1.

Hier sind zwar beide Wellenenden als beweglich dargestellt (= freies Wellenende 7), jedoch gilt dies nur für den Fall der ersten Inbetriebnahme des Friktionsfalschdrallaggregates. Bei dieser Gelegenheit zentriert sich die drehende Welle innerhalb des Gehäuses 3 in ihrer selbstgesuchten Lage, wobei auch ein radiales Rutschen des unteren Wellenendes nicht grundsätzlich ausgeschlossen ist.

Sobald die Welle jedoch diese selbstzentrierte Position eingenommen hat, friert sie in dieser Position fest und die dann geringen Unwuchtkräfte reichen nicht mehr aus, um das untere Wellenende erneut loszubrechen.

In diesem Zustand wirkt das untere Wellenende statisch, also wie ein festgelegtes Wellenende.

Das festgelegte Wellenende 6 sitzt gegenüber dem Gehäuse 3 radial unbeweglich im unteren Lager 4.

Die Fig 1, 1a, 2, 2a, 2b und 4 zeigen nun, daß zwischen den Außenringen 4.1 und dem Gehäuse 3, und den Druckplatten 14 bzw. 14.1 Reibungsdämpfer 9 sitzen, welche der Radialbewegung der Friktionselementwellen 2 innerhalb des Radialspiels 5 durch äußere Reibkräfte entgegenwirken.

Diese äußeren Reibkräfte werden über Reibpaarungen 15 von der unwuchterregten Schwingungsbewegung der Friktionselementwelle 2 auf die ortsfeste Halterung 3 übertragen. Dabei handelt es sich um Haftreibung. Auf die weitere Funktion wird noch eingegangen werden.

Diese Wirkung wird dadurch erreicht, daß an dem Außenring 4.1 des Loslagers ein Reibungsdämpfer 9 angreift, der durch axiale äußere Andrückkräfte gegen eine Stirnfläche des Außenrings festgelegt ist, und der die Radialbewegung der Welle 2 dämpft.

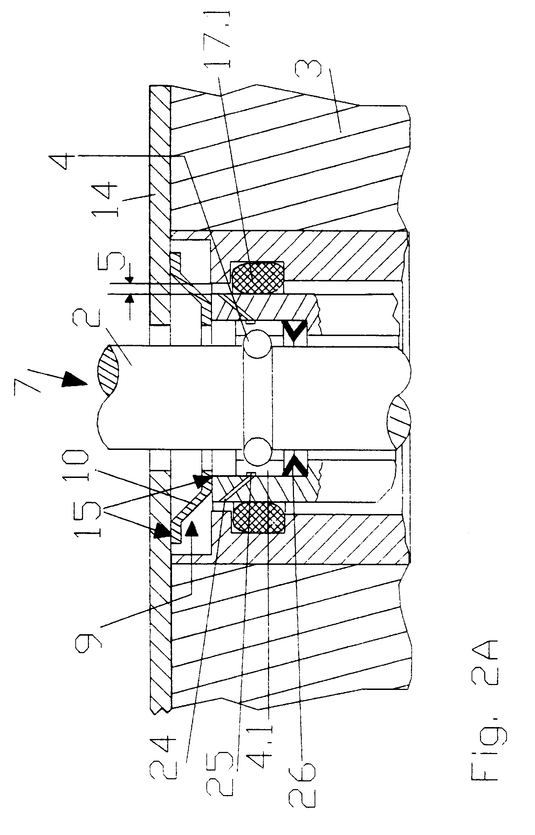

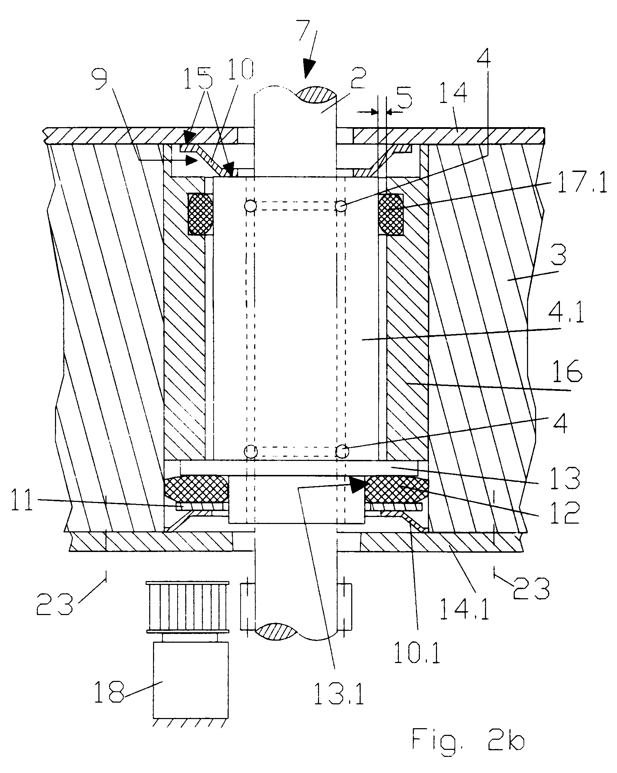

Bis auf den Fall des unteren Bereichs der Fig 2 bestehen die Reibungsdämpfer 9 ausschließlich aus ringförmigen Tellerfedern 10, die sich umfangsmäßig zwischen den Außenringen 4.1 und der ortsfesten Halterung (Gehäuse) 3 bzw. 14 bzw 14.1 abstützen.

Es soll an dieser Stelle jedoch ausdrücklich darauf hingewiesen werden, daß dies keine Beschränkung der Erfindung auf Tellerfedern 10 sein soll.

Es können alle Arten von Reibungsdämpfern Verwendung finden, welche zwischen den Außenringen 4.1 und der ortsfesten Halterung (Gehäuse) 3, 14, 14.1 sitzen, und bei der die unwuchterregte Bewegung der Friktionselementwelle durch äußere Haftreibkräfte auf einen Reibungsdämpfer übertragen und so bedämpft wird.

Im Falle des Einsatzes von Tellerfedern 10 erreicht man sehr einfach, daß die Außenringe 4.1 gegenüber der ortsfesten Halterung 3, 14, 14.1 von den Reibungsdämpfern 9 derart mit einer axialen Vorspannkraft eingespannt sind, daß die Reibungskraft abhängig von der jeweiligen Vorspannkraft ist.

Dies bietet den Vorteil, daß sich die Höhe der dämpfenden Reibungskraft durch die Auswahl einer Tellerfeder 10 mit entsprechender Kennlinie vorbestimmen läßt.

So können bei kleinen Einbaumaßen durch die Auswahl einer entsprechend steifen Tellerfeder trotzdem hohe Dämpfungskräfte erzeugt werden, wenn dies erforderlich ist.

Eine Möglichkeit der festen Einspannung eines Wellenendes ist im unteren Teil der Fig 2 gezeigt.

Dort stützt sich eine Gegendrucktellerfeder 10.1 zwischen der ortsfesten Gegendruckplatte 14.1, einem zwischengelegten Axialring 11 und einem Andruckring 12 an dem Bund 13 ab, der zu dem Außenring 4.1 gehört.

Der ringförmige Andruckring 12, der ein axial vorgespanntes Gummielement darstellt, sitzt in der Durchmesserstufe 13.1 des zwischen Axialring 11 und Bund 13 eingespannt.

Die axiale Vorspannung wird in diesem Fall aufgebracht von der Gegendrucktellerfeder 10.1, die den Andruckring 12 unter axialer Spannung von der Gegendruckplatte 14.1 über die Zentrierhülse 16 an die Druckplatte 14 drückt.

Die Gegendrucktellerfeder 10.1 ist in diesem Fall stärker als die Tellerfeder 10, um die zum Festhalten des an diesem Wellenende befindlichen Festlagers erforderlichen hohen Reibkräfte zwischen dem Andruckring 12 und dem Axialring 11 bzw. dem Bund 13 zu erzeugen.

Außerdem wird auf diese Weise zuverlässig verhindert, daß die Zentrierhülse von der Druckplatte 14 abhebt.

Dies gilt sinngemäß auch für das Ausführungsbeispiel gemäß Fig. 2b.

Hier besteht jedoch die Abweichung, daß zwischen der Gegendruckplatte 14.1 und dem Gehäuse 3 Kontakt besteht. Es wird also eine genau definierte Einbaulage zwischen der Gegendruckplatte 14.1 und dem Gehäuse 3 erreicht, wobei die Vorspannung der Gegendrucktellerfeder 10.1, genauso wie im Fall der Fig. 2, ausreichend groß ist, um das betreffende Wellenende im Sinne eines Festlagers axial und radial festzulegen.

Weiterhin übernimmt in diesem Ausführungsbeispiel der Andruckring 12 eine zentrierende Funktion für die Friktionselementwelle bereits bei der Montage. Zu diesem Zweck stützt sich der Andruckring 12 mit seinem Außenumfang am Gehäuse 3 und mit seinem Innenumfang an einem Fortsatz des Lageraußenrings 4.1 ab.

Eine weitere Besonderheit besteht darin, daß in diesem Fall die Gegendrucktellerfeder 10.1 an ihrem Außendurchmesser im Gehäuse 3 zwangszentriert ist. Zu diesem Zweck entspricht der Außendurchmesser der Gegendrucktellerfeder 10.1 dem Innendurchmesser des Gehäuses 3.

Für alle Figuren gilt:
Das obere Wälzlager und das untere Wälzlager 4 sind in axialer Richtung gegeneinander verspannt.

Diese Lagervorspannung hat den Zweck, die Wellenbewegung spielfrei auf die Lageraußenringe und die daran angreifenden Dämpfungselemente zu übertragen. Durch die spielfreie Übertragung wird erreicht, daß bereits bei kleinsten Ausschlägen die Dämpfungswirkung voll wirksam wird.

Im Falle der Fig. 2 und 2b erfolgt die axiale Lagervorspannung über den gemeinsamen Außenring 4.1, und zwar z.B. durch vorgegebene leicht unterschiedliche Kugelbahnabstände der Kugelbahnen im Außenring in Bezug zu den Kugelbahnen im Innenring.

Eine andere Möglichkeit der Vorspannung zwischen den Lagern kann bei gemeinsamem Außenring der beiden Wälzlager durch Einsetzen von Kugeln mit geringfügigem Übermaßdurchmesser erfolgen.

In allen Ausführungsbeispielen greifen die Reibungsdämpfer 9 im wesentlichen in den Bereichen der freien Enden 6 der Friktionselementwellen 2 an.

In den Fällen der Fig 1, 1a, 2, 2a, 2b und 4 sitzen die Friktionselementwellen 2 zusätzlich in ringförmigen radialen Gummidämpfern 17.1, 17.2 . Die radialen Gummidämpfer 17.1 dienen als oberer Zentrierring der Friktionselementwellen 2, während der radiale Gummidämpfer 17.2 analog als unterer Zentrierring dient, um die Welle bei der ersten Inbetriebnahme vor Einnahme der selbstzentrierten Position zu bedämpfen.

In allen Fällen erfolgt eine radiale Zusammenpressung der radialen Gummidämpfer 17.1 bzw. 17.2, wenn die Friktionselementwelle 2 bei Drehung eine unwuchterregte Auslenkung aus der gezeigten Zentralposition vornimmt.

Wie sich aus Fig 2 entnehmen läßt, werden die Friktionselementwellen 2 von dem Antriebsmotor 18 in Drehbewegung versetzt, der alle Friktionselementwellen 2 (s.Fig 3) über einen nicht gezeigten Zahnriemen, der auf die Zahnriemenscheiben 19 wirkt, antreibt.

Fig 1a zeigt eine Besonderheit der Erfindung. In diesem Fall ist der Außenring des unteren Lagers von Beginn an in radialer Richtung festgelegt. Dies wird dadurch erreicht, daß der Außenring am unteren Ende einen Klemmbund aufweist, mit welchem der Außenring zwischen der Gegendruckplatte 14.1 und der unteren Stirnseite der Zentrierhülse 16 eingeklemmt wird. Die Zentrierhülse 16 stützt sich ihrerseits mit dem oberen Ende an der Druckplatte 14 ab. Sie sitzt also unverrückbar fest zwischen der Druckplatte 14 und der Gegendruckplatte 14.1, ebenso wie der Außenring des unteren Lagers. Hierzu ist von Bedeutung, daß die Gegendruckplatte 14.1 mit Hilfe der Spannschrauben 23 fest gegen das Gehäuse 3 verspannt werden kann. Zu diesem Zweck besteht zwischen der Gegendruckplatte 14.1 und der unteren Stirnseite des Gehäuses 3 ein Luftspalt mit den Abmessungen des Klemmbundes.

Der Außenring des oberen Wälzlagers 4 wird von der Tellerfeder 10 abwärts gedrückt, wobei die von der Tellerfeder aufgebrachte Vorspannung so groß ist, daß die gesamte Welle in axialer Richtung festliegt. In diesem Fall übernimmt also die Tellerfeder die Doppelfunktion einerseits der axialen Festlegung der Welle und andererseits der Bedämpfung der Welle. Beide Funktionen sind über die Vorspannkraft und den Reibungskoeffizienten voneinander abhängig.

Fig 2a zeigt ein weiteres Ausführungsbeispiel zur axialen Verspannung der Wälzlagerung.

Die Darstellung der Fig 2a kann ein Ausschnitt aus der Darstellung der Fig 2 sein. Auf diese Figur und die dazugehörige Beschreibung wird für alle nicht näher bezeichneten Einzelheiten voll Bezug genommen.

Wesentlich ist, daß der Außenring 4.1 des oberen Kugellagers in einem Lagersitz untergebracht ist, der im Außenring des unteren Kugellagers gebildet wird. Der Außenring des oberen Kugellagers sitzt zunächst gleitend in dem Lagersitz, wobei sich eine axiale Vorspannfeder 26 zwischen einem Ringabsatz des Lagersitzes und der einsteckseitigen Stirnseite des Außenringes des oberen Wälzlagers befindet. Gegen die Kraft der axialen Vorspannfeder 26 wird der Außenring 4.1 des oberen Kugellagers in den Lagersitz gedrückt, bis die erforderliche Vorspannkraft erreicht ist. In dieser Position wird nun der Außenring 4.1 des oberen Kugellagers fixiert. Hierzu weist dieser auf seinem Außenumfang eine Ringnut 25 auf, die mit einer Bohrung 24 kommuniziert. Die Bohrung 24 durchsetzt den Außenring des unteren Lagers und mündet ins Freie. Zum Fixieren des Außenringes des oberen Lagers wird nach Aufbringen der axialen Vorspannung über die Bohrung 24 ein Klebstoff in die Ringnut 25 eingefüllt, der die beiden Lager in axialer Verspannung fixiert.

Zur Funktion:
In allen Ausführungsbeispielen sitzen die Friktionselementwellen 2 mit Radialspiel 5 gegenüber dem Gehäuse 3, 14, bzw 14.1. Man erkennt, daß das Radialspiel 5 lediglich am freien Wellenende auftritt.

Bekannterweise drehen sich derartige Friktionselementwellen 2 mit Drehzahlen bis zu 25000 Umdrehungen/Minute und mehr. Hierbei entstehen durch die immer vorhanden Unwuchten umlaufende Kräfte, welche zu einer Schwingungsbildung der gesamten Anordnung beitragen.

Die Schwingung der Anordnung wird also durch periodisch auftretende Unwuchtkräfte hervorgerufen, der man durch entgegengesetzt gerichtete Dämpfungskräfte entgegenwirken kann.

Diese Dämpfungskräfte werden durch die Reibungsdämpfer 9 erzeugt, da die Reibungsdämpfer 9 einerseits mit der ortsfesten Halterung 3 bzw. 14 bzw. 14.1 verbunden sind und andererseits mit den periodisch bewegten Außenringen der Loslager 4.1. An den Kontaktstellen zwischen den Reibungsdämpfern und den relativ dazu bewegten Oberflächen tritt also eine Reibkraft auf, deren Höhe abhängig von der Höhe der Anlagekraft an der Reibfläche und der Reibpaarung 15 ist. Die Höhe der Anlagekraft ist zweckmäßigerweise so zu wählen, daß bei Überschreiten einer vorbestimmten Maximalkraft die Reibflächenpaarung losbricht und ein Gleitreibungszustand erreicht wird, so daß sich die drehende Welle selbst zentrieren kann.

Danach wirken die Reibungsdämpfer statisch, das heißt, daß ein erneutes Losbrechen unter normalen Bedingungen nicht mehr erfolgen wird.

Außerdem wird durch die erfindungsgemäßen Reibdämpfer der Dämpfungs-Effekt auch beim Hochfahren des Friktionsaggregats erreicht, wenn dieses aus dem Stillstand auf die Betriebsdrehzahl gefahren wird und dabei die besonders gefährlichen Eigenresonanzfrequenzen der niedrigeren kritischen Drehzahlen durchfahren muß.

Nachdem die Friktionselementwelle ihre kritische Drehzahl durchfahren hat, klingen die auftretenden Schwingungsauslenkungen ab und damit auch die Bewegungen des Außenringes. Im Endzustand wird bei geeigneter Auswahl der Reibflächenpaarung der Reibungsdämpfer einen statischen Zustand einnehmen, da in diesem Fall die Welle selbstzentriert läuft.

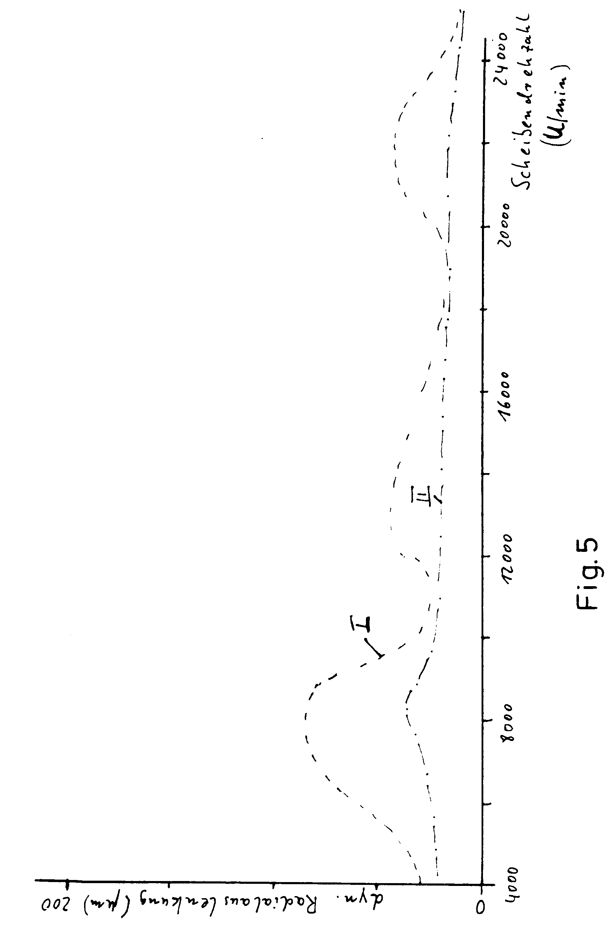

Fig 5 zeigt ein Diagramm, bei welchem die dynamischen Radialauslenkungen einer erfindungsgemäßen Friktionselementwelle in Abhängigkeit von der Scheibendrehzahl qualitativ aufgetragen sind. Dabei entspricht der Verlauf der Kurve I einem qualitativen Verlauf, wie er mit einer üblichen weichen Lagerung der Friktionselementwelle erreicht werden kann. Dieser Verlauf ist dargestellt um die Wirkung der Erfindung anhand des Verlaufs der Kurve II zeigen zu können. Die Kurve II zeigt einen insgesamt flacheren Verlauf, mit insgesamt geringeren Ausschlägen (etwa bis zu 2/3 geringer), wie er mit einer erfindungsgemäßen Lagerung erreicht werden kann.

Mit zunehmender Drehzahl nehmen in beiden Fällen zunächst die Auslenkungen zu und erreichen bei etwa 8000 U/min das Maximum, welches jedoch im Falle II um etwa zwei Drittel geringer liegt als im Falle I.

Im Bereich dieser Drehzahl liegt demnach die erste kritische Drehzahl der Friktionselementwelle, bei welcher die unwuchterregten Radialschwingungen gefährlich hohe Werte annehmen würden, wenn diesen nicht durch die erfindungsgemäßen Reibungsdämpfer entgegengewirkt würde.

Danach treten im Falle I zwei weitere Maxima im Bereich von 13000 U/min und 22000 U/min auf, für welche das soeben Gesagte entsprechend gilt, während im Falle II nach Durchfahren der ersten kritischen Drehzahl die Radialauslenkungen kontinuierlich abnehmen bis die angestrebte Drehzahl der Friktionselementwelle von etwa 24000 U/min erreicht ist.

Weiterhin fällt auf, daß im Falle I drei kritische Drehzahlbereiche durchfahren werden, während bei der Lagerung im Falle II nur ein einzige kritische Drehzahl auftritt.

Wie die Figuren 1, 1a, 2, 2a, 2b, 3 und 4 weiterhin zeigen, sitzen die Tellerfedern 10 bezüglich der Achsmitte zentriert. In diesem Fall bilden die Ränder der Tellerfedern 10 sowohl zur Friktionselemenwelle als auch zur Zentrierhülse 16 jeweils einen Abstand mit konstanter Ringbreite über den Umfang.

Für gewisse Anwendungsfälle kann es darüberhinaus vorteilhaft sein, die Tellerfedern 10 zumindest mit einem Ende zwangsläufig zu zentrieren.

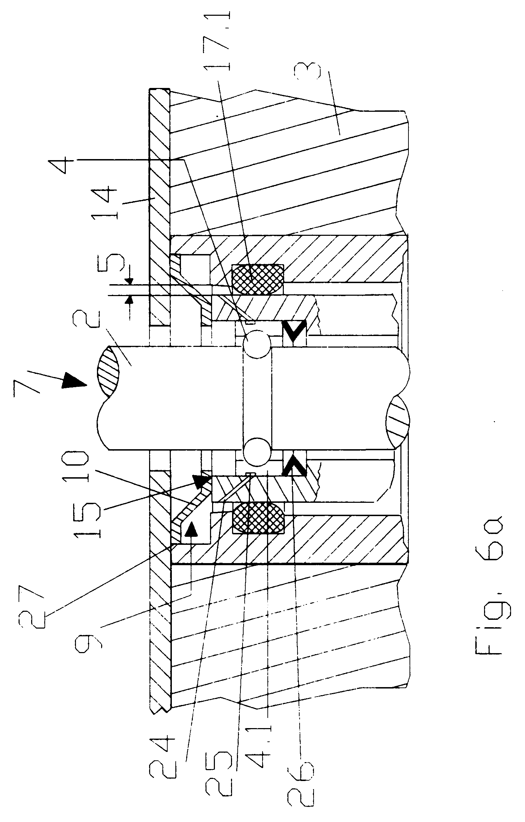

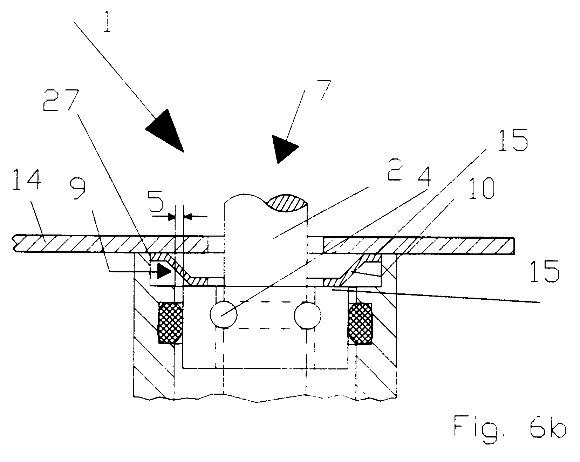

Hierzu zeigen die Fig. 6a, 6b, daß die Tellerfedern bezüglich des Gehäuses 3 innerhalb eines Zentrierringes 27 sitzen, dessen Innendurchmesser dem Außendurchmesser der Tellerfeder genau entspricht.

## Patentansprüche

1. Friktionsfalschdrallaggregat (1) zum Kräuseln von Chemiefasern mit drei angetriebenen Wellen (2), die auf der einen Seite einen Lager- und Antriebsbereich aufweisen und auf ihrer anderen Seite ein vom Lagerbereich auskragendes freies Ende an welchem sie mit einer Mehrzahl von Reibscheiben, die sich gegenseitig überlappen, bestückt sind, wobei
jede der Wellen in ihrem Lagerbereich durch zwei Wälzlager derart gelagert ist,
daß eines der Wälzlager als Festlager und das andere als gegenüber dem Gehäuse weich abgestütztes Loslager ausgebildet ist,
dadurch gekennzeichnet, daß
an dem Außenring (4.1) des Loslagers ein Reibungsdämpfer (9) angreift, der durch axiale äußere Andruckkräfte gegen eine Stirnfläche des Außenringes festgelegt ist, und der die Radialbewegung der Welle (2) dämpft.

2. Friktionsfalschdrallaggregat nach Anspruch 1,
dadurch gekennzeichnet, daß
das Loslager dem freien Wellenende (7) zugewandt ist.

3. Friktionsfalschdraller nach Anspruch 1 oder 2,
dadurch gekennzeichnet, daß
die Andruckkräfte im Sinne einer axialen Verspannung des Loslagers gegen das Festlager wirken.

4. Friktionsfalschdrallaggregat nach einem der Ansprüche 1 bis 3,
dadurch gekennzeichnet, daß
die Reibungsdämpfer (9) ringförmige Tellerfedern (10) sind, welche sich zwischen den Außenringen (4.1) der Loslager und dem Gehäuse (3) abstützen.

5. Friktionsfalschdrallaggregat nach einem der Ansprüche 1 bis 4,
dadurch gekennzeichnet, daß
die Außenringe (4.1) der Festlager gegenüber dem Gehäuse durch axial vorgespannte Gummiringe (12) festgelegt sind, welche in Durchmesserstufen (13.1) zwischen den Außenringen (4.1) und dem Gehäuse (3) eingespannt sitzen.

6. Friktionsfalschdrallaggregat nach einem der Ansprüche 1 bis 5,
dadurch gekennzeichnet, daß
die Außenringe (4.1) der Festlager zwischen einer Druckplatte (14) und einer Gegendruckplatte (14.1) des Gehäuses (3) eingespannt sitzen.

7. Friktionsfalschdrallaggregat nach Anspruch 5 oder 6,
dadurch gekennzeichnet, daß
jede Welle (2) derart in den Wälzlagern (4) gelagert ist, daß das Loslager mit seinem Außenring in dem Außenring des Festlagers axial verspannt sitzt.

8. Friktionsaggregat nach einem der Ansprüche 1 bis 7,
dadurch gekennzeichnet, daß
die Reibungsdämpfer (9) im wesentlichen im Bereich der freien Enden (7) der Wellen (2) angreifen.

9. Friktionsaggregat nach einem der Ansprüche 1 bis 8,
dadurch gekennzeichnet, daß
die Wellen (2) mittels ringförmiger radialer Gummidämpfer (17.1, 17.2) weich im Gehäuse (3) derart abgestützt sind, daß die Gummidämpfer bei Radialbewegung zusammengepreßt werden.

10. Friktionsaggregat nach einem der Ansprüche 1 bis 9
dadurch gekennzeichnet, daß
die Wälzlager (4) jeder Welle (2) in axialer Richtung gegeneinander spielfrei vorgespannt sind.

## Claims

1. Frictional false-twisting unit (1) for crimping synthetic fibres, having three driven shafts (2) which at one end have a bearing and drive region and at their other end have a free end, which projects from the bearing region and at which the shaft is equipped with a plurality of mutually overlapping friction disks, wherein
each of the shafts is supported in its bearing region by two rolling bearings in such a way that
one of the rolling bearings takes the form of a locating bearing and the other takes the form of a floating bearing which is supported in a non-rigid manner relative to the housing,
characterized in that
acting upon the outer ring (4.1) of the floating bearing is a friction damper (9), which is fixed by axial external contact pressure forces against an end face of the outer ring and which damps the radial movement of the shaft (2).

2. Frictional false-twisting unit according to claim 1,
characterized in that
the floating bearing faces towards the free shaft end (7).

3. Frictional false-twisting unit according to claim 1 or 2,
characterized in that
the contact pressure forces act in the sense of an axial bracing of the floating bearing against the locating bearing.

4. Frictional false-twisting unit according to one of claims 1 to 3,
characterized in that
the friction dampers (9) are annular cup springs (10) which are supported between the outer rings (4.1) of the floating bearings and the housing (3).

5. Frictional false-twisting unit according to one of claims 1 to 4,
characterized in that
the outer rings (4.1) of the locating bearings are fixed relative to the housing by means of axially prestressed rubber rings (12), which are seated in diametral steps (13.1), clamped between the outer rings (4.1) and the housing (3).

6. Frictional false-twisting unit according to one of claims 1 to 5,
characterized in that
the outer rings (4.1) of the locating bearings are seated clamped between a pressure plate (14) and a counterpressure plate (14.1) of the housing (3).

7. Frictional false-twisting unit according to claim 5 or 6,
characterized in that
each shaft (2) is supported in the rolling bearings (4) in such a way that the floating bearing is seated with its outer ring axially braced in the outer ring of the locating bearing.

8. Frictional false-twisting unit according to one of claims 1 to 7,
characterized in that
the friction dampers (9) act substantially in the region of the free ends (7) of the shafts (2).

9. Frictional false-twisting unit according to one of claims 1 to 8,
characterized in that
the shafts (2) are supported by means of annular radial rubber dampers (17.1, 17.2) non-rigidly in the housing (3) in such a way that the rubber dampers are compressed in the event of radial movement.

10. Frictional unit according to one of claims 1 to 9,
characterized in that
the rolling bearings (4) of each shaft (2) are prestressed in an axial direction against one another without play.

## Revendications

1. Dispositif à fausse torsion (1) à friction pour la texturation de fibres chimiques. Comportant trois arbres (2) qui présentent d'un côté une zone de support et d'entraînement et de l'autre une extrémité libre en porte-à-faux par rapport à la zone de support et sur laquelle sont disposés plusieurs disques de friction qui se chevauchent mutuellement, chacun des arbres étant supporté au niveau de sa zone de support par deux paliers à roulement de telle sorte que l'un des paliers est agenc sous forme de palier fixe et que l'autre palier est agencé sous forme de palier libre, souple par rapport au bâti, caractérisé par le fait qu'un amortisseur à friction (9) agit sur la bague extérieure (4.1) du palier libre, lequel amortisseur est appliqué contre la face frontale de la bague extérieure par des forces de pression axiales extérieures et amortit le mouvement radial de l'arbre (2).

2. Dispositif à fausse torsion à friction selon la revendication 1, caractérisé par le fait que le palier libre est tourné vers l'extrémité libre de l'arbre (7).

3. Dispositif à fausse torsion à friction selon la revendication 1 ou la revendication 2, caractérisé par le fait que les forces de pression agissent dans le sens d'une mise en précontrainte axiale du palier libre vis-à-vis du palier fixe.

4. Dispositif à fausse torsion à friction selon l'une des revendications 1 à 3, caractérisé par le fait que les amortisseurs à friction (9) sont des rondelles ressorts (10) qui prennent appui entre les bagues extérieures (4.1) du palier libre et le bâti (3).

5. Dispositif à fausse torsion à fiction selon l'une des revendications 1 à 4, caractérisé par le fait que ces bagues extérieures (4.1) des paliers fixes sont immobilisées vis-à-vis du bâti par des bagues (12) de caoutchouc précontraintes dans la direction axiale qui sont montées sous contrainte dans des gorges (13.1) entre les bagues extérieures (4.1) et le bâti (3).

6. Dispositif à fausse torsion à friction selon l'une des revendications 1 à 5, caractérisé par le fait que les bagues extérieures (4.1) des paliers fixes sont serrées entre une plaque de pression (14) et une contre-plaque (14.1) du bâti (3).

7. Dispositif à fausse torsion à friction selon la revendication 5 ou la revendication 6, caractérisé par le fait que chaque arbre (2) est monté dans les paliers à roulement (4) de manière telle que le palier libre soit monté avec précontrainte axiale par sa bague extérieure dans la bague extérieure du palier fixe.

8. Dispositif à fausse torsion à friction selon l'une des revendications 1 à 7, caractérise par le fait que les amortisseurs à friction (9) agissent essentiellement dans la région des extrémités libres (7) des arbres (2).

9. Dispositif à fausse torsion à friction selon l'une des revendications 1 à 8, caractérisé par le fait que les arbres (2) sont supportés de manière souple dans le bâti (3) par l'intermédiaire d'amortisseurs radiaux (17.1, 17.2) annulaires en caoutchouc de manière telle qu'en présence de déplacements radiaux les amortisseurs en caoutchouc soient comprimés.

10. Dispositif à fausse torsion à friction selon l'une des revendications 1 à 9, caractérisé par le fait que les paliers à roulement (4) de chaque arbre (2) sont précontraints sans jeu les uns par rapport aux autres dans la direction axiale.
